**Europäisches Patentamt**

**European Patent Office**

**Office européen des brevets**

(19)

(11) Veröffentlichungsnummer: **0 192 092**
**B1**

(12) # EUROPÄISCHE PATENTSCHRIFT

(45) Veröffentlichungstag der Patentschrift:
**18.01.89**

(51) Int. Cl.⁴: **G 21 C 3/34**

(21) Anmeldenummer: **86101168.2**

(22) Anmeldetag: **29.01.86**

(54) Kernreaktorbrennelement.

(30) Priorität: **11.02.85 DE 3504640**

(43) Veröffentlichungstag der Anmeldung:
**27.08.86 Patentblatt 86/35**

(45) Bekanntmachung des Hinweises auf die Patenterteilung:
**18.01.89 Patentblatt 89/3**

(84) Benannte Vertragsstaaten:
**DE SE**

(56) Entgegenhaltungen:
**US-A- 3 405 033**
**US-A- 3 457 140**
**US-A- 4 190 494**

(73) Patentinhaber: **Siemens Aktiengesellschaft Berlin und München, Wittelsbacherplatz 2, D-8000 München 2 (DE)**

(72) Erfinder: **Dressel, Heinrich, Dipl.-Ing. (FH), Neuhauser Strasse 11, D-8521 Hessdorf (DE)**

## Beschreibung

Die Erfindung betrifft ein Kernreaktorbrennelement nach dem Oberbegriff des Patentanspruches 1.

Ein solches Kernreaktorbrennelement ist aus der US-Patentschrift 3 457 140 bekannt. Bei diesem bekannten Kernreaktorbrennelement sind alle Positionen der Gittermaschen durch ein Paar miteinander fluchtender Haupthülsen besetzt, das jeweils eine Gittermasche darstellt. Die Querschnitte der Haupthülsen sind zueinander kongruent und haben als Aussenkontur ein regelmässiges Achteck. Die Haupthülsen liegen in jedem Teilgitter jeweils an vier Seiten dieses regelmässigen Achteckes, die eine Winkellage von 90° zueinander haben, satt an den entsprechenden Stellen der Haupthülsen in den benachbarten Gittermaschenpositionen oder an der Innenseite eines Aussensteges des Abstandhalters an. An jeder der vier anderen Seiten ist einer von vier Verbindungsstegen angeformt, die in den Innenraum des betreffenden Paares miteinander fluchtender Haupthülsen und damit in die von ihm dargestellte Gittermasche vorstehen und dort Anlagefedern für den in diesem Innenraum befindlichen Stab sind.

Der Abstandhalter des bekannten Kernreaktorbrennelementes bildet nicht nur einen erheblichen Strömungswiderstand für ein Kühlmittel, das das Kernreaktorbrennelement in einem Kernreaktor in Längsrichtung durchströmt, sondern an diesem Abstandhalter treten auch eine Vielzahl von Wanddopplungen auf, an denen teurer Werkstoff verbraucht ist und an denen in einem Kernreaktor viel Spaltneutronen absorbiert werden.

Der Erfindung liegt die Aufgabe zugrunde, den Strömungswiderstand des Abstandhalters zu verringern und nach Möglichkeit die Anzahl der Wanddopplungen zu reduzieren.

Zur Lösung dieser Aufgabe hat ein Kernreaktorbrennelement der eingangs erwähnten Art erfindungsgemäss die Merkmale des kennzeichnenden Teiles des Patentanspruches 1.

Auf diese Weise werden die Gittermaschen des Abstandhalters an den von den Paaren miteinander fluchtender Haupthülsen nicht besetzten Zwischenpositionen für Gittermaschen durch die benachbarten Paare miteinander fluchtender Haupthülsen und die Distanzhülsen mitgebildet, was sich verringernd auf den Strömungswiderstand des Abstandhalters auswirkt.

Vorteilhafte Ausbildungen des erfindungsgemässen Kernreaktorbrennelementes, die teils eine fertigungsgünstige Struktur des Abstandhalters, teils besonders verringerte Neutronenabsorption und noch weiter verringerten Strömungswiderstand des Abstandhalters bewirken, sind Gegenstand der Patentansprüche 2 bis 12.

Die Erfindung und ihre Vorteile seien anhand der Zeichnung an einem Ausführungsbeispiel näher erläutert:

Fig. 1 zeigt schematisch in Längsansicht ein erfindungsgemässes Kernreaktorbrennelement.

Fig. 2 zeigt eine Draufsicht auf einen Ausschnitt aus einem Abstandhalter in einem erfindungsgemässen Kernreaktorbrennelement nach Fig. 1.

Fig. 3 zeigt einen Längsschnitt entsprechend der strichpunktierten Linie III-III in Fig. 2.

Fig. 4 bis 9 zeigen jeweils in Draufsicht und Seitenansicht Einzelteile aus dem Abstandhalter nach den Fig. 2 und 3.

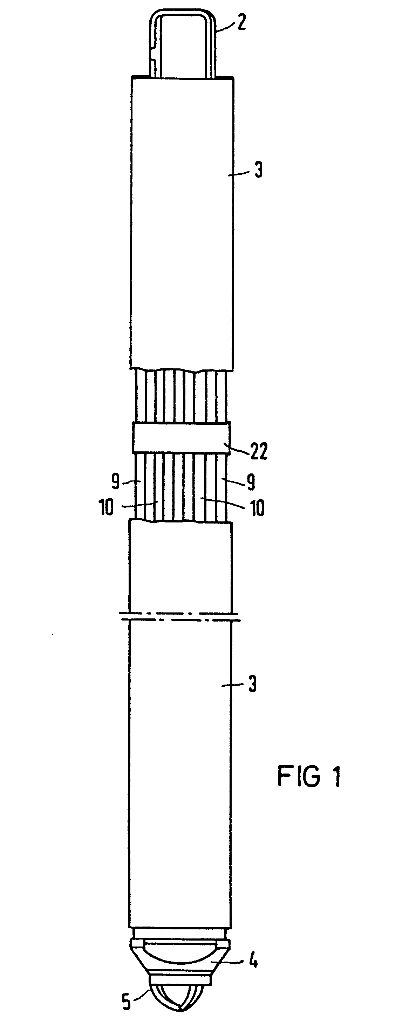

Ein Kernreaktorbrennelement nach Fig. 1 ist für einen Siedewasserkernreaktor bestimmt und weist einen nicht näher erkennbaren Brennelementkopf mit einem Haltegriff 2 auf der Oberseite einer quadratischen Gitterplatte auf. Auf der Oberseite dieser quadratischen Gitterplatte befinden sich ferner zwei ebenfalls nicht erkennbare Stehbolzen, auf denen ein dem Kernreaktorbrennelement zugeordneter Hüllkasten 3 aus Blech mit zwei nicht sichtbaren Querstreifen ebenfalls aus Blech ruht, die in zwei Ecken innen im Hüllkasten 3 an dessen Oberende angebracht sind. Einer dieser Querstreifen ist mit dem betreffenden Stehbolzen verschraubt. Der Hüllkasten 3 hat quadratischen Querschnitt und ist an beiden Enden offen. Die Gitterplatte selbst ist mit einer Vielzahl von Strömungsdurchführungen in Längsrichtung des Kernreaktorbrennelementes versehen, durch die $H_2O$ im Reaktorkern des Siedewasserkernreaktors hindurchströmt. Diese Gitterplatte ist rechtwinklig zur Längsrichtung des Kernreaktorbrennelementes angeordnet.

Das Kernreaktorbrennelement nach Fig. 1 ist ferner mit einem Brennelementfuss 4 versehen, der ebenfalls eine verdeckte und nicht erkennbare quadratische Gitterplatte aufweist. Auch diese quadratische Gitterplatte hat eine Vielzahl von Strömungsdurchführungen in Längsrichtung des Kernreaktorbrennelementes für $H_2O$ im Reaktorkern des Siedewasserkernreaktors. Auf der Unterseite ist die Gitterplatte des Brennelementfusses 4 mit einem zur Gitterplatte offenen Passorgan 5 versehen, das in einer Masche eines im Reaktorkern des Siedewasserkernreaktors befindlichen sogenannten unteren Kerngitters eingesetzt ist.

Das Kernreaktorbrennelement nach Fig. 1 weist ausserdem eine Reihe als Haltestäbe 9 für Kopfteil und Fussteil 4 des Kernreaktorbrennelementes ausgebildete, mit Kernbrennstoff gefüllte Brennstäbe auf. Diese Haltestäbe 9 sind in die Gitterplatte des Brennelementfusses 4 eingeschraubt und durchgreifen die Gitterplatte des Brennelementkopfes und sind dort mit einer an der Oberseite der Gitterplatte befindlichen Mutter an der Gitterplatte angeschraubt.

Weitere mit Kernbrennstoff gefüllte Brennstäbe 10 sind mit ihren Enden lose in Durchführungen in den Gitterplatten von Kopfteil und Fussteil 4 des Kernreaktorbrennelementes eingesetzt. Auf ihren Oberenden sitzen als Schraubenfedern ausgebildete Niederhaltefedern, die Druckfedern sind und sich jeweils am Brennstab 10 einerseits und an der Unterseite der Gitterplatte des Brennelementkopfes andererseits abstützen.

Das Kernreaktorbrennelement nach Fig. 1 weist schliesslich zwischen dem Brennelementkopf und dem Brennelementfuss 4 mehrere rechteckige, im vorliegenden Fall quadratische Abstandhalter auf, die mit den quadratischen Gitterplatten von Kopfteil und Fussteil 4 fluchten und von denen ein Abstandhalter 22 in Fig. 1 erkennbar ist. Die anderen Abstandhalter sind genauso ausgebildet wie der Abstandhalter 22, sind aber durch den dem Brennelement zugeordneten Hüllkasten 3 genauso wie die Gitterplatte des Kopfteiles und die Gitterplatte des Fussteiles 4 verdeckt und daher nicht sichtbar.

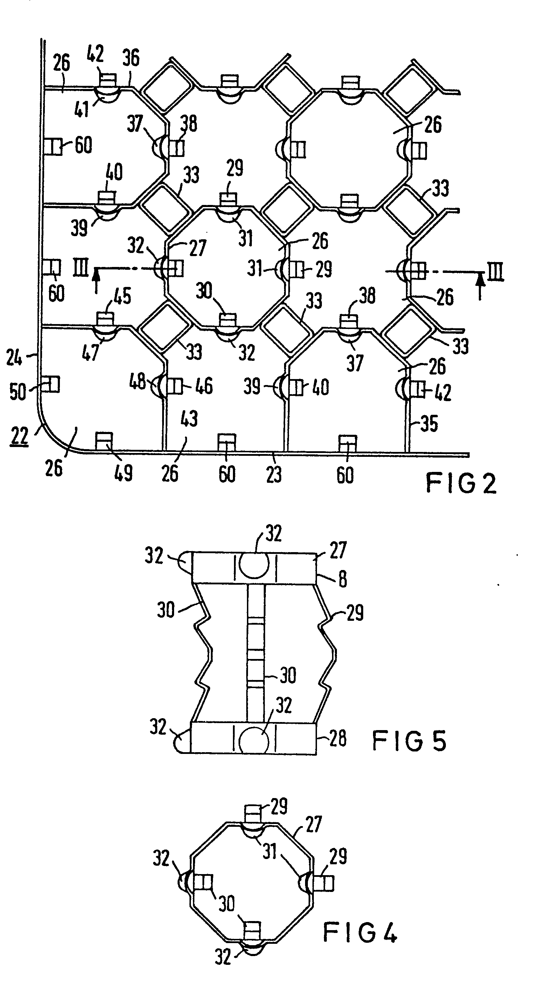

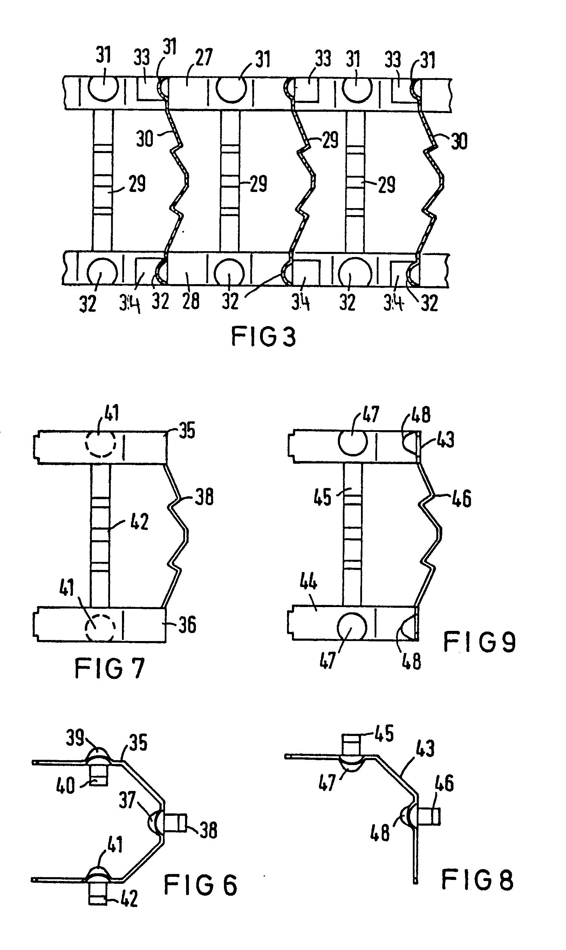

Ein in den Fig. 2 und 3 näher dargestellter Abstandhalter 22 ist quadratisch und besteht aus einer Nikkel-Chrom-Eisenlegierung. Es sind zwei flache, ebene Aussenstege 23 und 24 zu erkennen, die hochkant rechtwinklig zueinander stehen und die an den Ecken des Abstandhalters 22 eine Abrundung bilden. Der Abstandhalter 22 hat ferner Gittermaschen 26, die sich wie die Felder eines Schachbrettes an dicht in Zeilen und in zu diesen Zeilen rechtwinkligen Spalten angeordneten Positionen befinden. Durch die Gittermaschen 26 greift jeweils ein in den Fig. 2 und 3 nicht dargestellter, Kernbrennstoff enthaltender Brennstab des Kernreaktorbrennelementes, zu dem die Aussenstege 23 und 24 rechtwinklig sind und dem diese Aussenstege 23 und 24 flach zugewandt sind. Ein solcher Brennstab enthält Kernbrennstoff in einem gasdicht verschlossenen Hüllrohr aus einer Zirkoniumlegierung.

Innerhalb der Aussenstege 23 und 24 des Abstandhalters 22 sind Paare miteinander fluchtender Haupthülsen 27 und 28, die in den Fig. 4 und 5 näher dargestellt sind und die im Abstandhalter 22 zueinander und zu den Brennstäben parallele Längsachsen haben, wie die Felder gleicher Farbe des Schachbrettes an den Positionen der Gittermaschen 26 in Zeilen und in zu diesen Zeilen rechtwinkligen Spalten jeweils unter Freilassung einer Zwischenposition zwischen zwei besetzten Positionen angeordnet.

Wie insbesondere Fig. 4 und 5 zeigen, haben die Haupthülsen 27 und 28 aller Haupthülsenpaare des Abstandhalters 22 einen Querschnitt mit deckungsgleicher Aussenkontur, die ein regelmässiges Achteck ist. An zwei Seiten dieses Achteckes, die zu demselben Aussensteg 23 oder 24 parallel sind, sind die Haupthülsen 27 und 28 mit Verbindungsstegen 29 und 30 versehen, die eine zu den Längsachsen der Haupthülsenpaare 27 und 28 parallele Richtung übergreifen. Diese Verbindungsstege 29 und 30 sind an den Haupthülsen 27 und 28 jeweils in der Mitte der Seite des die Aussenkontur des Querschnittes bildenden regelmässigen Achteckes angeformt und haben eine Breite, die etwa gleich 1/3 der Länge der Seite dieses regelmäsigen Achteckes ist. Zwei an zueinander parallelen Seiten dieses Achteckes sitzende Verbindungsstege 29 und 30 sind in der Mitte jeweils in die gleiche Richtung gewölbt d.h. ein Verbindungssteg ist in bezug auf die Haupthülsen 27 und 28 nach aussen und ein Verbindungssteg 30 in bezug auf die Haupthülsen 27 und 28 nach innen gewölbt. Ferner besitzen die Haupthülsen 27 und 28 in der Mitte der Seiten der ein regelmässiges Achteck bildenden Aussenkontur ihres Querschnittes auf der Haupthülsenwand eine starre Noppe 31 bzw. 32. Die starre Noppe 31 ist nach innen gerichtet, wenn der Verbindungssteg 29 an der Seite der Aussenkontur in bezug auf die Haupthülse 27 oder 28 nach aussen gerichtet ist, und die starre Noppe 32 ist in bezug auf die Haupthülse 27 oder 28 nach aussen gerichtet, wenn der Verbindungssteg 30 in bezug auf die Haupthülsen 27 oder 28 nach innen gerichtet ist.

Im Abstandhalter 22 sind in Diagonalrichtung zwischen den Haupthülsen 27 und 28 Paare von miteinander fluchtenden Distanzhülsen 33 und 34 angeordnet, deren Querschnitt kleiner als der Querschnitt der Haupthülsen 27 und 28 ist und als Aussenkontur ein Rechteck hat. Die Aussenkontur kann auch ein Quadrat sein, dessen Seitenlänge gleich der Seitenlänge der ein regelmässiges Achteck bildenden Aussenkontur des Querschnittes der Haupthülsen 27 und 28 ist. Diese Distanzhülsen 33 und 34 befinden sich zwischen den Haupthülsen 27 bzw. 28 jeweils satt an einer der Seiten der Aussenkontur von deren Querschnitt anliegend, die sich zwischen zwei Seiten mit Verbindungsstegen 29 bzw. 30 und Noppen 31 bzw. 32 befinden. Die Haupthülsen 27 bilden zusammen mit den an ihnen angeschweissten Distanzhülsen 33 ein erstes Teilgitter des Abstandhalters 22 und die Haupthülsen 28 zusammen mit den an ihnen angeschweissten Distanzhülsen 34 ein zweites, zu dem ersten Teilgitter paralleles Teilgitter.

An den Positionen der Gittermaschen 26 in einer Reihe bzw. Spalte an einem Aussensteg 23 bzw. 24 sind jeweils unter Freilassung einer Zwischenposition zwischen zwei besetzten Positionen ein Paar miteinander fluchtender Bügel 35 und 36 entsprechend Fig. 6 und 7 aus U-förmigen, den nicht dargestellten Stäben in den Gittermaschen 26 flach zugewandten Stegen angeordnet. Mit ihren beiden Schenkeln stehen die Bügel 35 und 36 rechtwinklig auf der Innenseite des betreffenden Aussensteges 23 oder 24 auf, den sie mit einer Zunge durchgreifen, an der sie mit dem betreffenden Aussensteg 23 oder 24 verschweisst sind. Zwischen ihren beiden Schenkeln haben die Bügel 35 und 36 einen Querschnitt mit einer Aussenkontur eines halben regelmässigen Achteckes, das deckungsgleich zum die Aussenkontur des Querschnittes der Haupthülsen 27 und 28 bildenden regelmässigen Achteck ist. In jedem Teilgitter des Abstandhalters 22 befinden sich in jeder der beiden Diagonalrichtungen zwischen zwei Haupthülsen 27 und 28 und einem Bügel 35 bzw. 36 an diesem satt anliegend jeweils eine Distanzhülse 33 bzw. 34 mit einem Querschnitt, dessen Aussenkontur ein Rechteck ist. Die Aussenkontur kann auch ein Quadrat sein mit einer Seitenlänge, die gleich der Seitenlänge des die Aussenkontur des Querschnittes der Haupthülsen 27 und 28 bildenden regelmässigen Achteckes ist. Die miteinander fluchtenden Distanzhülsen 33 und 34 sind mit den Bügeln 35 bzw. 36 verschweisst. Zwischen den Anlageflächen der Distanzhülsen 33 bzw. 34 sind die Bügel 35 bzw. 36 parallel zu demjenigen Aussensteg 23 bzw. 24 geformt, an dem sie festgeschweisst sind. Dort weisen sie jeweils in der Mitte je eine starre Noppe 37 auf, die in bezug auf den Bügel 35 bzw. 36 nach innen gerichtet ist. Ferner ist dort ein Verbindungssteg 38 zwischen den beiden Bügeln 35 und 36 angeformt, dessen Breite etwa gleich 1/3 der Seitenlänge des die Aussenkontur des Querschnittes der Haupthülsen 27 und 28 bildenden regelmässigen Achteckes ist, der in bezug auf die Bügel 35 und 36 nach aussen gewölbt ist und der eine Anlagefeder für einen nicht dargestellten Stab in einer Gittermasche 26 bildet. Ausserdem befinden sich an dem einen Schenkel der Bügel 35 und 36 eine in bezug auf den betreffenden Bügel nach aussen gerichtete Noppe 39. An derselben Stelle ist auch ein Verbindungssteg 40 mit der gleichen Breite wie der Verbindungssteg 38 angeformt, der in bezug auf die beiden Bügel 35 und 36 nach innen gewölbt ist und der eine Anlagefeder für einen nicht dargestellten Stab in einer Gittermasche 26 bildet. Am anderen Schenkel der Bügel 35 und 36 ist eine in bezug auf diese Bügel 35 und 36 nach innen gerichtete starre Noppe 41 angebracht. An der gleichen Stelle ist ein Verbindungssteg 42 mit gleicher Breite wie der Verbindungssteg 38 zwischen den Stegen 35 und 36 angeformt, der in bezug auf die beiden Bügel 35 und 36 nach aussen gewölbt ist und der ebenfalls eine Anlagefeder für einen nicht dargestellten Stab in einer Gittermasche 26 bildet.

Zwischen zwei an einer Ecke des Abstandhalters 22 rechtwinklig zueinander stossenden Aussenstegen 23 und 24 ist in einer Eckposition für die Gittermaschen 26 ein Paar miteinander fluchtender Winkelteile 43 und 44 nach den Fig. 8 und 9 mit L-förmigem Querschnitt aus den Stäben flach zugewandten Stegen angeordnet. Mit jedem ihrer beiden Schenkel stehen die Winkelteile 43 und 44 rechtwinklig auf der Innenseite eines anderen der beiden Aussenstege 23 und 24 auf, den sie mit einer Zunge durchgreifen, an der sie mit dem betreffenden Aussensteg verschweisst sind.

Zwischen ihren beiden Schenkeln haben die Winkelteile 43 und 44 einen Querschnitt mit einer Aussenkontur, die gleich einem Viertel des regemässigen Achteckes ist, das die Aussenkontur des Querschnittes der Haupthülsen 27 und 28 ist. In jedem der beiden zueinander parallelen Teilgitter des Abstandhalters 22 befindet sich zwischen einer Haupthülse 27 oder 28 und einem Winkelteil 43 bzw. 44 eine Distanzhülse 33 bzw. 34, deren Querschnitt die Aussenkontur eines Recheckes hat. Die Aussenkontur kann auch ein Quadrat mit einer Seitenlänge gleich der Seitenlänge des die Aussenkontur des Querschnittes der Haupthülsen 27 und 28 bildenden regelmässigen Achteckes sein. Diese miteinander fluchtenden Distanzhülsen 33 und 34 liegen satt an den Winkelteilen 43 bzw. 44 und den betreffenden Haupthülsen 27 und 28 an, mit denen sie verschweisst sind. Die Stege der Winkelteile 43 und 44 sind den nicht dargestellten Stäben im Abstandhalter 22 flach zugewandt.

Beiderseits der Verbindungsstelle mit den Distanzhülsen 33 bzw. 34 ist an den Schenkeln der Winkelteile 43 und 44 ein Verbindungssteg 45 und 46 angeformt. Die Breite beider Verbindungsstege 45 und 46 ist etwa gleich 1/3 der Seitenlänge des die Aussenkontur des Querschnittes der Haupthülsen 27 und 28 darstellenden regelmässigen Achteckes. Beide Verbindungsstege 45 und 46 sind in bezug auf die Winkelteile 43 und 44 nach aussen gewölbt und bilden Anlagefedern jeweils für einen nicht dargestellten Stab in einer Gittermasche 26. An den Stellen, an denen die Verbindungsstege 45 bzw. 46 angeformt sind, haben die Schenkel der Winkelteile 43 und 44 jeweils eine in bezug auf die Winkelteile 43 und 44 nach innen gerichtete starre Noppe 47 bzw. 48. Diesen beiden starren Noppen 47 und 48 gegenüberliegend sind an der Innenseite der Aussenstege 23 und 24 angeformte Stege 49 und 50 vorgesehen, die in bezug auf diese Aussenstege 23 und 24 nach innen gewölbt sind und Anlagefedern für einen nicht dargestellten Stab in der Gittermasche 26 in der betreffenden Ecke des Abstandhalters 22 bilden. Ähnlich sind Anlagefedern bildende, bezüglich der Aussenstege 23 und 24 nach innen gewölbte Stege 60 an den Aussenstegen 23 und 24 gegenüber den starren Noppen 32 und 37 an den Haupthülsen 27 und 28 bzw. an den Bügeln 35 und 36 vorgesehen, die eine zu den Längsachsen der Haupthülsenpaare 27 und 28 parallele Richtung übergreifen.

In den Gittermaschen 26 des Abstandhalters 22, die entweder durch den Innenraum der Haupthülsen 27 und 28 bzw. der Bügel 35 und 36 aus U-förmigen Stegen bzw. der Winkelteile 43 und 44 aus L-förmigen Stegen oder aus dem Zwischenraum zwischen Distanzhülsen 33 und 34 und Haupthülsen 27 und 28 bzw. Bügeln 35 und 36 mit U-förmigen Stegen bzw. Winkelteilen 43 und 44 mit L-förmigen Stegen gebildet sind, findet jeweils ein nicht dargestellter Stab zwei elastische Dreipunktlagerungen, die einem in Längsrichtung des Kernreaktorbrennelementes strömenden Kühlmittel nur einen geringen Strömungswiderstand entgegensetzen.

Die paarweise fluchtenden Distanzhülsen 33 und 34 können auch z.B. an den Seiten ihrer Aussenkontur nicht dargestellte Verbindungsstege aufweisen, deren Breite kleiner als der Umfang dieser Distanzhülsen ist. Auch können diese Distanzhülsen 33 und 34 zur Materialverringerung einen Längsschlitz aufweisen. Desgleichen können die Haupthülsen 27 und 28 mit einem Längsschlitz versehen sein.

Das erfindungsgemässe Kernreaktorbrennelement insbesondere mit einem Abstandhalter nach den Fig. 2 bis 9 kann auch ein Kernreaktorbrennelement für einen Druckwasserkernreaktor sein. Durch die Gittermaschen 26 des Abstandhalters 22 greifen bei einem solchen Kernreaktorbrennelement nicht nur Kernbrennstoff enthaltende Brennstäbe, sondern auch Steuerstabführungsrohre, die mit einem Ende an einer Kopfplatte eines Kopfteiles und mit dem anderen Ende an einer Fussplatte eines Fussteiles des Kernreaktorbrennelementes lösbar z.B. mit einer Schraubverbindung befestigt sind. Die Steuerstabführungsrohre durchsetzen Kopf- und Fussplatte rechtwinklig. Kopf- und Fussplatte können ebenfalls quadratisch sein. Die jeweils durch eine der Maschen 26 des Abstandhalters 22 greifenden Brennstäbe sind weder an der Kopf- noch an der Fussplatte des Kernreaktorbrennelementes befestigt, sondern sie haben zwischen Kopf- und Fussplatte in Längsrichtung Spiel und können sich daher in Richtung ihrer Längsachse d.h. in Längsrichtung des Kernreaktorbrennelementes frei ausdehnen.

## Patentansprüche

1. Kernreaktorbrennelement mit zueinander parallelen, nebeneinander angeordneten Stäben, insbesondere Kernbrennstoff enthaltenden Stäben, und mit einem Abstandhalter (22), der Gittermaschen (26) zur Aufnahme jeweils eines Stabes hat, die sich wie die Felder eines Schachbrettes in Zeilen und in zu diesen Zeilen rechtwinkligen spalten angeordneten Positionen befinden und die durch zwei zueinander parallele Teilgitter gebildet sind, welche gemeinsam an den Stäben parallel zugewandten Aussenstegen (23,24) des Abstandhalters angebracht sind und jeweils eine Gittermasche darstellende Paare miteinander fluchtender Haupthülsen (27, 28) aufweisen, von denen jede der beiden Haupthülsen einem anderen Teilgitter angehört und die einen Verbindungssteg (29, 30) zwischen den beiden Haupthülsen aufweisen, dessen Breite kleiner als der Umfang einer Haupthülse ist und der eine Anlagefeder für einen Stab darstellt, dadurch gekennzeichnet, dass die Paare miteinander fluchtender Haupthülsen (27, 28) wie die Felder gleicher Farbe des Schachbrettes an den Positionen der Gittermaschen (26) in den Zeilen und Spalten jeweils unter Freilassung einer Zwischenposition zwischen zwei besetzten Positionen angeordnet sind und dass sich in jedem Teilgitter zwischen zwei Haupthülsen (27, 38) an diesen anliegend eine Distanzhülse (33, 34) befindet.

2. Kernreaktorbrennelement nach Anspruch 1, dadurch gekennzeichnet, dass an den Positionen der Gittermaschen (26) in einer Reihe bzw. Spalte an einem Aussensteg (23) oder (24) jeweils unter Freilassung einer Zwischenposition zwischen zwei besetzten Positionen ein Paar miteinander fluchtender Bügel (35, 36) mit U-förmigem Querschnitt aus den Stäben flach zugewandten Stegen angeordnet ist, die mit ihren beiden Schenkeln rechtwinklig auf der Innenseite des Aussensteges (23, 24) stehen und die einen Verbindungssteg (38, 40, 42) mit einer Breite kleiner als der Bügelumfang als Anlagefeder für einen Stab aufweisen, und dass sich in jedem Teilgitter zwischen zwei Haupthülsen (27, 28) und einem Bügel (35, 36) an diesem anliegend jeweils eine Distanzhülse (33, 34) befindet.

3. Kernreaktorbrennelement nach Anspruch 1, dadurch gekennzeichnet, dass zwischen zwei an einer Ecke des Abstandhalters (22) aneinander stossenden Aussenstegen (23, 24) in einer Eckposition für die Gittermaschen (26) ein Paar fluchtender Winkelteile (43, 44) mit L-förmigem Querschnitt aus den Stäben flach zugewandten Stegen angeordnet ist, die mit jedem ihrer beiden Schenkel rechtwinklig auf der Innenseite eines anderen der beiden Aussenstege (23, 24) stehen und die einen Verbindungssteg (45, 46) mit einer Breite kleiner als der Winkelteilumfang als Anlagefeder für einen Stab aufweisen, und dass sich in jedem Teilgitter zwischen der Haupthülse (27, 28) und einem Winkelteil (43, 44) an diesem anliegend eine Distanzhülse (33, 34) befindet.

4. Kernreaktorbrennelement nach Anspruch 1, dadurch gekennzeichnet, dass der Querschnitt der Distanzhülsen (33, 34) kleiner als der Querschnitt der Haupthülsen (27, 28) ist.

5. Kernreaktorbrennelement nach Anspruch 1, dadurch gekennzeichnet, dass die Aussenkontur des Querschnittes der Distanzhülsen (33, 34) ein Rechteck ist.

6. Kernreaktorbrennelement nach Anspruch 1, dadurch gekennzeichnet, dass der Abstandhalter (22) quadratisch mit geradlinig langgestreckten Aussenstegen (23, 24) ist.

7. Kernreaktorbrennelement nach Anspruch 1, dadurch gekennzeichnet, dass die Aussenkontur des Querschnittes der Haupthülsen (27, 28) wenigstens angenähert ein regelmässiges Achteck ist.

8. Kernreaktorbrennelement nach Anspruch 5 und 7, dadurch gekennzeichnet, dass die Aussenkontur des Querschnittes der Distanzhülsen (33, 34) ein Quadrat ist mit einer Seitenlänge, die wenigstens annähernd gleich der Seitenlänge der Aussenkontur des Querschnittes der Haupthülsen (27, 28) ist.

9. Kernreaktorbrennelement nach Anspruch 1, dadurch gekennzeichnet, dass die Distanzhülsen (33, 34) in den beiden Teilgittern paarweise miteinander fluchten.

10. Kernreaktorbrennelement nach Anspruch 9, dadurch gekennzeichnet, dass die paarweise miteinander fluchtenden Distanzhülsen einen Verbindungssteg aufweisen, dessen Breite kleiner als der Umfang einer Distanzhülse ist.

11. Kernreaktorbrennelement nach Anspruch 1, dadurch gekennzeichnet, dass die Distanzhülsen einen Längsschlitz aufweisen.

12. Kernreaktorbrennelement nach Anspruch 1, dadurch gekennzeichnet, dass die Haupthülsen einen Längsschlitz aufweisen.

## Claims

1. Nuclear reactor fuel element having rods, which are arranged side by side and are parallel to each other, more particularly rods containing nuclear fuel, and having a spacer (22), which for the purpose of receiving, in each case, one rod has grid meshes (26), which are located, like the squares of a chessboard, in lines and positions arranged in columns at right angles to these lines and which are formed by two partial grids which are parallel to each other and which are provided jointly on outer bars (23, 24) of the spacer, said bars facing the rods in a parallel manner, and have, in each case, pairs of aligned main sleeves (27,28) presenting a grid mesh, each of the two main sleeves belonging to a different partial grid, and which have a connecting bar (29, 30) between the two main sleeves, the width of which bar is smaller than the periphery of a main sleeve and which bar represents a locating spring for a rod, characterised in that the pairs of aligned main sleeves (27, 28) are arranged like the squares of the same colour of the chessboard at the positions of the grid meshes (26) in the rows and columns, whilst leaving free, in each case, an intermediate position between two occupied positions, and in that a spacing sleeve (33, 34) is located in each partial grid between two main sleeves (27, 28), resting against the latter.

2. Nuclear reactor fuel element according to claim 1, characterised in that arranged at the positions of the grid meshes (26) in a row or column on an outer bar (23) or (24), whilst leaving free, in each case, an intermediate position between two occupied positions, there is a pair of aligned stirrup-like members (35, 36) with U-shaped cross section consisting of bars facing the rods in a planar manner, which bars with their two sides stand at right angles on the inner side of the outer bar (23, 24) and have a connecting bar (38, 40, 42) with a width which is smaller than the stirrup-like member periphery as a locating spring for a rod, and in that, in each case, a spacing sleeve (33,34) is located in each partial grid between two main sleeves (27, 28) and a stirrup-like member (35, 36), resting against the latter.

3. Nuclear reactor fuel element according to claim 1, characterised in that arranged between two outer bars (23, 24), which butt against each other at one corner of the spacer (22), in a corner position for the grid meshes (26) there is a pair of aligned angular portions (43, 44) with L-shaped cross section consisting of bars facing the rods in a planar manner, which bars with each of their two sides stand at right angles on the inner side of a different outer bar of the two outer bars (23, 24), and have a connecting bar (45, 46) with a width which is smaller than the angular portion periphery as a locating spring for a rod, and in that a spacing sleeve (33, 34) is located in each partial grid between a main sleeve (27, 28) and an angular portion (43, 44), resting against the latter.

4. Nuclear reactor fuel element according to claim 1, characterised in that the cross section of the spacing sleeves (33, 34) is smaller than the cross section of the main sleeves (27, 28).

5. Nuclear reactor fuel element according to claim 1, characterised in that the outer contour of the cross section of the spacing sleeves (33, 34) is a rectangle.

6. Nuclear reactor fuel element according to claim 1, characterised in that the spacer (22) is square without outer bars (23, 24) extended in a straight line.

7. Nuclear reactor fuel element according to claim 1, characterised in that the outer contour of the cross section of the main sleeves (27, 28) is at least approximately a regular octagon.

8. Nuclear reactor fuel element according to claim 5 and 7, characterised in that the outer contour of the cross section of the spacing sleeves (33, 34) is a square with a side length which is at least approximately equal to the side length of the outer contour of the cross section of the main sleeves (27, 28).

9. Nuclear reactor fuel element according to claim 1, characterised in that the spacing sleeves (33, 34) are in aligment with each other in pairs in the two partial grids.

10. Nuclear reactor fuel element according to claim 9, characterised in that the spacing sleeves, which are in alignment with each other in pairs, have a connecting bar, the width of which is smaller than the periphery of a spacing sleeve.

11. Nuclear reactor fuel element according to claim 1, characterised in that the spacing sleeves have a longitudinal slot.

12. Nuclear reactor fuel element according to claim 1, characterised in that the main sleeves have a longitudinal slot.

**Revendications**

1. Assemblage combustible de réacteur nucléaire, comprenant des crayons disposés côte à côte en étant parallèles, notamment des crayons contenant du combustible nucléaire, et une grille d'espacement (22) dont les mailles (26), dans chacune desquelles est reçu un crayon, se trouvent en des positions rangées comme les cases d'un échiquier en lignes et en colonnes perpendiculaires à ces lignes et sont formées par deux grilles partielles parallèles qui sont montées en commun sur les barrettes extérieures (23, 24) de la grille d'espacement dirigées parallèlement aux crayons, qui comportent chacune une paire, constituant la maille de la grille, de douilles principales (27, 28) alignées, chacune des deux douilles principales faisant partie d'une autre grille partielle, et qui comportent une barrette de liaison (29, 30) entre les deux douilles principales, de largeur inférieure au pourtour d'une douille principale et constituant un ressort d'appui pour un crayon, caractérisé en ce que les paires de douilles principales (27, 28) alignées sont disposées comme les cases de même couleur de l'échiquier aux positions des mailles de la grille (26) dans les lignes et les colonnes en laissant libre une position intermédiaire entre deux positions occupées, et en ce que dans chaque grille partielle se trouve, entre deux douilles principales (27, 28) et en contact avec elles, une douille d'entretoisement (33, 34).

2. Assemblage combustible de réacteur nucléaire suivant la revendication 1, caractérisé en ce qu'en les positions des mailles de la grille (26) dans une ligne ou dans une colonne est montée sur une barrette extérieure (23) ou (24), tout en laissant libre une position intermédiaire entre deux positions occupées, une paire d'arceaux (35, 36) alignés, de section transversale en forme de U, issus des barrettes tournant leur partie plate vers les crayons, dont les deux branches sont perpendiculaires au côté intérieur de la barrette extérieure (23, 24) et qui comportent une barrette de liaison (38, 40, 42) de largeur inférieure au pourtour de l'arceau et servant de ressort d'appui pour un crayon, et en ce que dans chaque grille partielle se trouve, entre deux douilles principales (27, 28) et un arceau (35, 36) et en contact avec elles, une douille d'entretoisement (33, 34).

3. Assemblage combustible de réacteur nucléaire suivant la revendication 1, caractérisé en ce que, entre deux barrettes extérieures (23, 24) aboutées l'une à l'autre à un sommet de la grille d'espacement (22), est monté, dans une position de sommet pour les mailles de la grille (26), un couple de cornières (43, 44) alignées, de section transversale en forme de L, issues des barrettes tournant leurs parties plates vers les crayons, dont chacune des deux ailes est perpendiculaire au côté inférieur d'une autre des deux barrettes extérieures (23, 24) et qui comporte une barrette de liaison (45, 46) de largeur inférieur au pourtour de la cornière et servant de ressort d'appui pour un crayon, et en ce que, dans chaque grille partielle, se trouve, entre une douille principale (27, 28) et une cornière (43, 44) et en contact avec cette cornière, une douille d'entretoisement (33, 34).

4. Assemblage combustible de réacteur nucléaire suivant la revendication 1, caractérisé en ce que la section transversale des douilles d'entretoisement (33, 34) est inférieure à la section transversale des douilles principales (27, 28).

5. Assemblage combustible de réacteur nucléaire suivant la revendication 1, caractérisé en ce que le contour extérieur de la section transversale des douilles d'entretoisement (33, 34) est un rectangle.

6. Assemblage combustible de réacteur nucléaire suivant la revendication 1, caractérisé en ce que la grille d'espacement (22) est carrée, en ayant des barrettes extérieures (23, 24) rectilignes.

7. Assemblage combustible de réacteur nucléaire suivant la revendication 1, caractérisé en ce que le contour extérieur de la section transversale des douilles principales (27, 28) est au moins approximativement un octogone régulier.

8. Assemblage combustible de réacteur nucléaire suivant la revendication 5 ou 7, caractérisé en ce que le contour extérieur de la section transversale des douilles d'entretoisement (33, 34) est un carré de longueur de côté au moins approximativement égale à la longueur du côté du contour extérieur de la section transversale des douilles principales (27, 28).

9. Assemblage combustible de réacteur nucléaire suivant la revendication 1, caractérisé en ce que les douilles d'entretoisement (33, 34) sont alignées par couple dans les deux grilles partielles.

10. Assemblage combustible de réacteur nucléaire suivant la revendication 9, caractérisé en ce que les douilles d'entretoisement alignées par couple comportent une barrette de liaison de largeur inférieure au pourtour d'une douille d'entretoisement.

11. Assemblage combustible de réacteur nucléaire suivant la revendication 1, caractérisé en ce que les douilles d'entretoisement comportent une fente longitudinale.

12. Assemblage combustible de réacteur nucléaire suivant la revendication 1, caractérisé en ce que les douilles principales comportent une fente longitudinale.

FIG 1

FIG 2

FIG 5

FIG 4

EP 0 192 092 B1

FIG 3

FIG 7

FIG 9

FIG 6

FIG 8

13